# EUROPEAN PATENT APPLICATION

(11) **EP 2 991 301 A1**
(43) Date of publication of application: **02.03.2016**
(21) Application number: 13883232.4
(22) Date of filing: 26.04.2013
(51) Int. Cl.: H04L 29/06, H04L 29/08

(54) **PROJECTION-TYPE VIDEO DISPLAY DEVICE**

(71) Applicant: Hitachi Maxell, Ltd., Ibaraki-shi, Osaka 567-8567 (JP)
(72) Inventor: URATA Hiroyuki, Osaka 567-8567 (JP); SUNAHARA Yusuke, Yokohama-shi Kanagawa 244-0817 (JP); ISHIKAWA Tatsuya, Osaka 567-8567 (JP); IWASAKI Michio, Yokohama-shi Kanagawa 244-0817 (JP); NAGANO Yuki, Osaka 567-8567 (JP); TAKATSUJI Masaaki, Yokohama-shi Kanagawa 244-0817 (JP)
(74) Representative: Moore, Graeme Patrick
(86) International application number: PCT/JP2013/062321
(87) International publication number: WO 2014/174657

(57) **Abstract**

A projection-type video display device which is easily radio-connected to a portable terminal and can freely switchably display video images sent from a plurality of portable terminals is provided. The projection-type video display device is directly connected to a portable terminal (2) by a radio transmission scheme without a relay station. The projection-type video display device (1) has a proximity communication unit (10) which transmits/receives device information of the projection-type display device (1) to/from the portable terminal, and the portable terminal (2) is put over or touched on the proximity communication unit (10) to transmit/receive the device information. The projection-type video display device has a radio signal input unit 20 which selects a desired portable terminal from the plurality of portable terminals and connects the selected portable terminal.

## Description

### Technical Field

The present invention relates to a projection-type video display device.

### Background Art

In order to control a projection-type video display device such as a liquid crystal projector, in addition to a configuration connected to a PC (Personal Computer) to transmit a command or data, a system controlled by being connected to a portable terminal is proposed. For example, Patent Literature 1 discloses a configuration in which a PDA (Personal Digital Assistance) and a liquid crystal projector are connected to each other and transmit/receive data to/from each other through a wireless LAN to control the liquid crystal projector.

### Citation List

### Patent Literature

PTL 1: Japanese Patent Application Laid-Open No. 2003-324494

### Summary of Invention

### Technical Problem

In recent years, as the portable terminal, smart phones (multifunction portable phones) and tablet terminals have been popularized. On the other hand, liquid crystal projectors have also been able to be miniaturized and carried so as to project video images everywhere. Thus, a type of usage in which the portable terminal and the liquid crystal projector are associated with each other to display image data in the portable terminal on a screen or the like through the liquid crystal projector is supposed.

In this case, the portable terminal and the liquid crystal projector cannot be easily connected to each other, and a plurality of portable terminals are disadvantageously difficult to be selected and connected to the liquid crystal projector. For example, when a smart phone and a liquid crystal projector are connected by wireless LAN connection (for example, Wi-Fi connection: radio connection standard of Wi-Fi Alliance), an SSID (Service Set Identifier), a security password serving as identifier of an access point serving as a relay point, or the like must be input. Since a radio connection to the liquid crystal projector is configured by one system, a plurality of portable terminals are difficult to be directly connected to the projector so as to hard to freely switchably display video images of the portable terminals through the projector.

It is an object of the present invention to provide a projection-type video display device which can be easily radio-connected to a portable terminal and can freely switchably display video images sent from a plurality of portable terminals.

### Solution to Problems

The present invention provides a projection-type video display device which is connected to an external device to display a video image input from the external device, the external device including a portable terminal, including a proximity communication unit which can be directly connected to the portable terminal by a radio transmission scheme without a relay station and transmits/receives device information of the projection-type video display device to/from the external device, wherein the external device is put over or touched on the proximity communication unit to transmit/receive the device information.

The present invention also provide a projection-type video display device which is connected to a plurality of external devices to display video images input from the external devices, the external devices including portable terminals, including a radio signal input unit which can be directly connected to the portable terminals by a radio transmission scheme without a relay station, selects an external device for displaying a video image from the plurality of external devices, and connects the selected external device.

### Advantageous Effects of Invention

According to the present invention, a projection-type video display device which can easily radio-connected to a portable terminal and can freely switchably display video images sent from a plurality of portable terminals. Brief Description of Drawings

Figure 1 is external views of a projection-type video display device according to the embodiment.
Figure 2 is an internal block diagram of the projection-type video display device.
Figure 3 is a diagram for explaining a touch function performed by a portable terminal.
Figure 4 is a flow chart showing a connection procedure of a portable terminal by using the touch function.
Figure 5A is a diagram (Miracast/access point) showing switching between connections to portable terminals.
Figure 5B is a diagram (selection from a plurality of portable terminals) showing switching between connections to the portable terminals.
Figure 5C is a diagram (display of a plurality of images) showing switching between connections to the portable terminals.
Figure 6 is a flow chart showing a procedure of selecting one of the plurality of portable terminals to switch between the portable terminals.
Figure 7A is a diagram (projection on desk) showing an installation of the projection-type video display device.
Figure 7B is a diagram (screen projection) showing an installation of the projection-type video display device. Description of Embodiments

An embodiment of the present invention will be described below. As a projection-type video display device, a liquid crystal projector (simply called a projector) will be exemplified. As the portable terminal, a smart phone or a tablet is supposed.

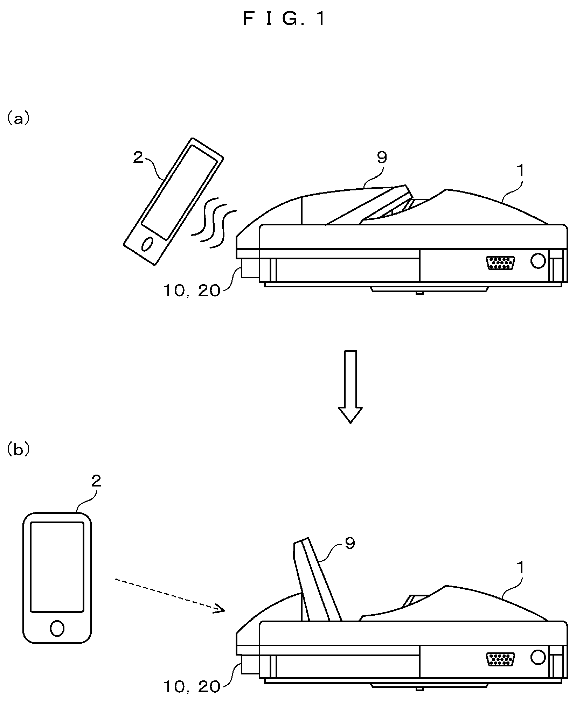

Figure 1 is external views (side views) of a projection-type video display device according to the embodiment. Figure 1 (a) shows a state in which a reflecting mirror 9 of a liquid crystal projector 1 is closed, and Figure 1 (b) shows a state in which the reflecting mirror is opened. As the projector 1, for example, an ultra-short focus projection-type liquid crystal projector is supposed. In order to achieve ultra-short focus projection, the reflecting mirror 9 which reflects a video luminous flux emitted from a projection lens to project the luminous flux on a projection surface (screen) is mounted on the upper surface of the projector 1, and the reflecting mirror 9 is raised up to project a video image on a rear surface side.

The projector 1 includes a proximity communication unit 10 over which a portable terminal (smart phone, tablet, or the like) 2 is put to transmit/receive information, and a radio signal input unit 20 which radio-inputs a video signal sent from the portable terminal 2. An NFC tag having an NFC (Near Field Communication) function is buried in the proximity communication unit 10. The NFC function has about 10 cm of a communication distance, and can easily perform data communication of device information such that one device is put over the other device or one device is touched on the other device (to be referred to as a touch function hereinafter). The radio signal input unit 20 can receive video signals from the plurality of portable terminals 2 by a Miracast scheme (Wi-Fi CERTIFIED Miracast™: radio video transmission scheme operating on Wi-Fi Direct), selects one of the video signals, and projects and displays the input video signal (to be referred to as an input selecting function hereinafter). The proximity communication unit 10 and the radio signal input unit 20 are disposed inside a housing side surface not to prevent the reflecting mirror 9 from opened/closed.

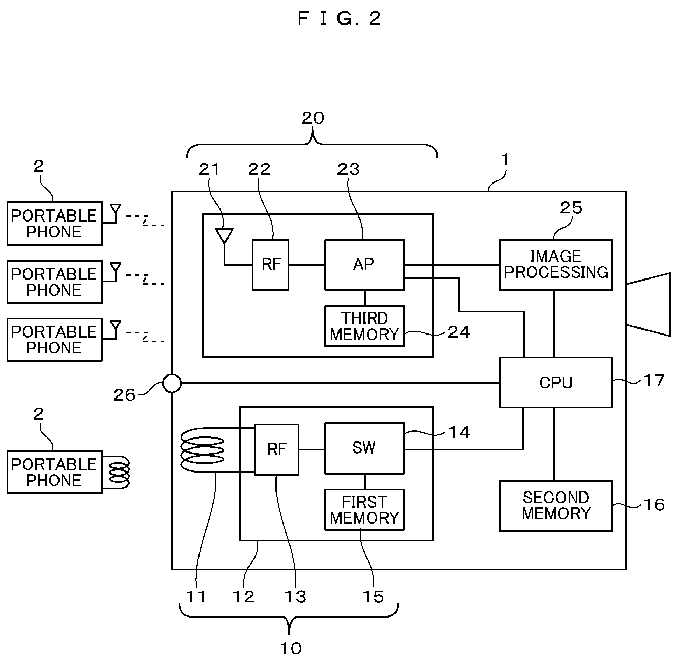

Figure 2 is an internal block diagram of the projection-type video display device. This drawing shows only a new functional part of the projector 1 according to the embodiment, and does not show an optical system and a mechanical system. In the proximity communication unit 10, in order to achieve the touch function, an antenna 11 and an NFC tag 12 are disposed. The NFC tag 12 has an RFID element 13 to contactlessly transmit/receive data (device information) by electromagnetic coupling between both antenna coils disposed in the projector 1 and the portable terminal 2, respectively. The data to be transmitted/received is stored in a first memory 15, and a changeover switch 14 switches between data writing/reading operations. An NFC tag is also disposed on the portable terminal 2 side. When the proximity communication unit 10 is configured by the NFC tag 12 to easily connect the portable terminal 2 and the projector 1 to each other (pairing, authentication, or the like) so as to make it possible to receive and transmit data.

The radio signal input unit 20 can receive video signals sent from the plurality of portable terminals 2 to select one terminal from the portable terminals 2. At this time, in video transmission between each of the portable terminals 2 and the projector 1, Miracast scheme (Wi-Fi CERTIFIED Miracast™) which is established by Wi-Fi Alliance and serves as a display transmission technique achieved by one-to-one radio communication is employed. The radio signal input unit 20 includes an antenna 21, an RF chip 22, an AP chip (application processor such as a portable processor or a multi-media processor) 23, and a third memory 24. In the third memory 24, data such as an IP address, a subnet mask, and a password of the AP chip 23 required for a radio connection are stored. In an input selecting operation, when a selection signal is sent to a control signal input terminal post 26 with a remote controller or the like, a CPU 17 sends a control signal to the AP chip 23, and the AP chip 23 selects an input signal sent from a desired terminal. An image processing circuit 25 processes the selected video signal to project a video image through a projection lens. A second memory 16 stores data or the like to set an operation of the projector 1. According to the Miracast scheme, devices are directly radio-connected to each other without a router or an access point to make it possible to send video data from the portable terminal to the projector and to reproduce the video data. Furthermore, since the Miracast scheme operates on a conventional Wi-Fi system, transmission can be advantageously established even though a distance between devices is relatively long.

A new function using the projection-type video display device according to the embodiment will be described below.

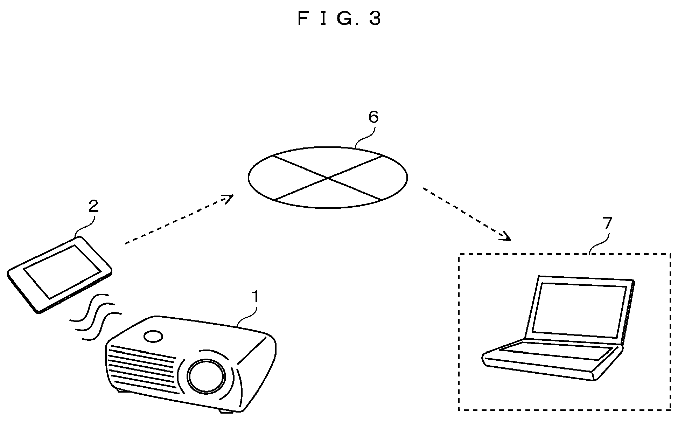

Figure 3 is a diagram for explaining a touch function achieved by a portable terminal. The proximity communication unit 10 of the projector 1 includes an NFC function. The portable terminal 2 is touched on (is put over) the proximity communication unit 10 of the projector 1 to transmit/receive device information between the portable terminal 2 and the projector 1. In this manner, the portable terminal 2 can perform setting (pairing process) of a radio connection to the projector 1 touched with the portable terminal 2. Furthermore, when setting information of the projector 1 is sent from the portable terminal 2 to the projector 1, the operation of the projector 1 can be easily set. In this case, the projector 1 temporarily writes received setting condition data in the first memory 15 and transfers the setting condition data to the second memory 16 to set the operation of the projector 1. At this time, an authentication password for security received from the portable terminal 2 is written in the first memory 15. It is checked whether the authentication password is matched with a password registered in the second memory 16 in advance so as to make it possible to prevent the projector 1 from communicating with portable terminals except for a specific portable terminal.

In contrast to this, the projector 1 reads operating information, failure information, and the like of the projector 1 stored in the second memory 16 and temporarily transfers the information to the first memory 15. The portable terminal 2 acquires the operating information of the projector 1 from the first memory 15 with the NFC function. The portable terminal 2 transmits the acquired operating information and the acquired failure information of the projector 1 to a maintenance service company 7 through the Internet 6 to make it possible to easily perform a maintenance work (lamp replacement, filter replacement, and the like) for the projector 1.

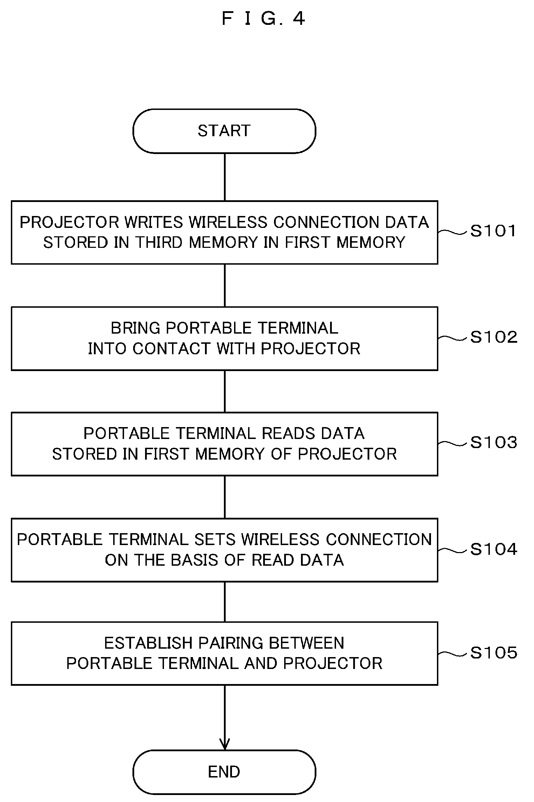

Figure 4 is a flow chart showing a connection procedure of a portable terminal using a touch function.

In step S101, the CPU 17 of the projector 1 communicates with the AP chip 23 to read radio connection data (IP address, subnet mask, password, and the like) from the third memory 24 and to write the radio connection data in the first memory 15.

In step S102, the portable terminal 2 having the NFC function is touched on the projector 1. In step S103, the portable terminal 2, by the touch operation, reads the connection data (IP address and the like) stored in the first memory 15 from the antenna 11 of the projector 1.

In step S104, the portable terminal 2 sets a radio connection on the basis of the read connection data. In step S105, pairing between the portable terminal 2 and the projector 1 is established.

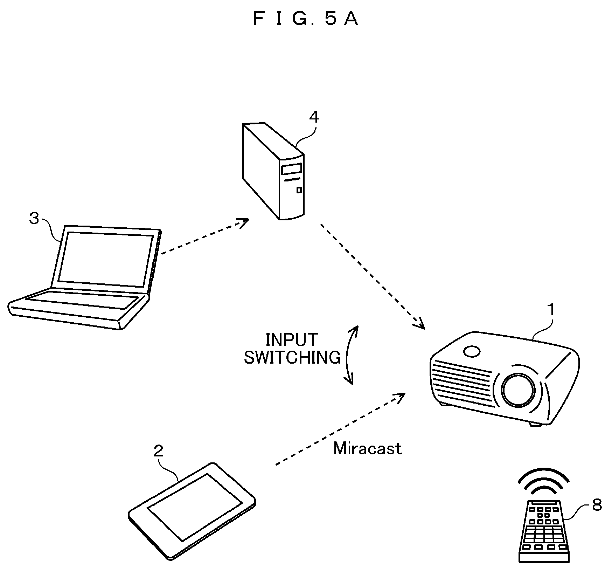

Figure 5A to Figure 5C are diagrams showing connection switching between the portable terminals and the projector.

Figure 5A shows switching between an infrastructure connection and a Miracast connection. In the conventional infrastructure connection, the projector 1 communicates with a PC 3 or the like through an access point 4. On the other hand, in the Miracast connection, the portable terminal 2 and the projector 1 are directly connected to each other without the access point 4. Even though a Wi-Fi Direct scheme is used in place of the Miracast connection, a direct connection can be similarly established without the access point 4. A use operates a remote controller 8 or the like to make it possible to cause the radio signal input unit 20 of the projector 1 to select a connection to a desired device (PC 3/portable terminal 2).

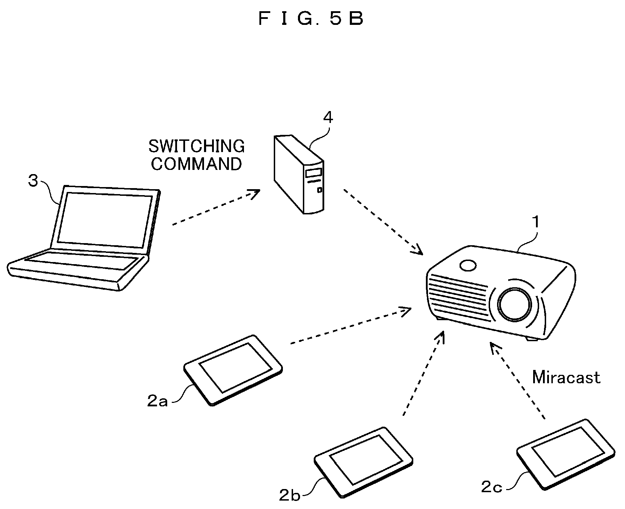

Figure 5B shows a case in which one portable terminal is selected from a plurality of portable terminals and switched. Each of portable terminals 2a to 2c and the projector 1 can be directly connected to each other by the Miracast scheme. In connection switching, for example, a switching command is sent from the PC 3 to the projector 1 through the access point 4. The radio signal input unit 20 of the projector 1 selects a desired terminal to connect the projector 1 to the desired terminal to display the video image. This type of usage is suitable for a case in which a plurality of students in a school or the like operate their portable terminals to make replies and a teacher operates a PC to select one of the students and to display her/his reply by the projector 1.

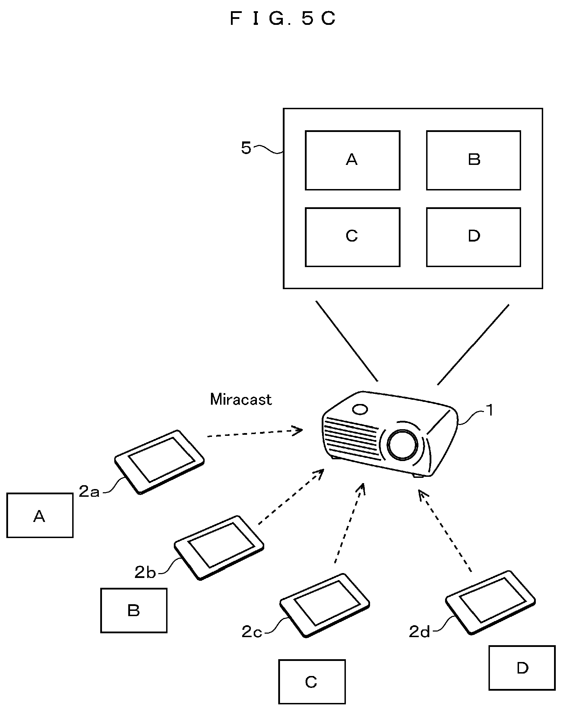

Figure 5C shows a case in which video images sent from a plurality of portable terminals are simultaneously displayed on the same screen. Each of the portable terminals 2a to 2d and the projector 1 can be directly connected to each other by the Miracast scheme. The radio signal input unit 20 of the projector 1 sequentially switches radio connections to the portable terminals, captures images A to D of the portable terminals, and displays the images as a multi-screen (preview screen) on the same screen 5. In this manner, video images from the plurality of portable terminals can be displayed on one screen, and a desired image can be retrieved from the plurality of images.

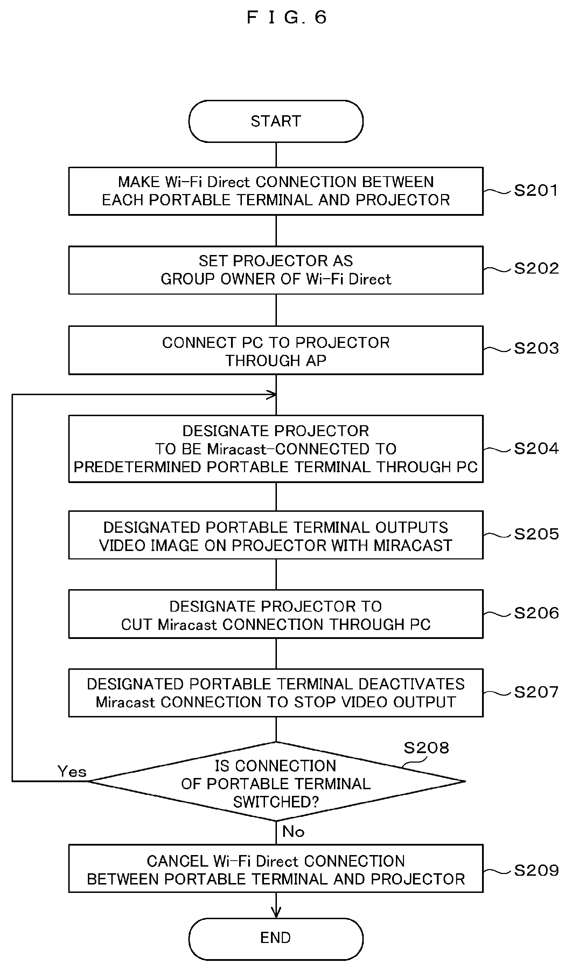

Figure 6 is a flow chart showing a procedure executed when one of a plurality of portable terminals is selected and switched. A case in which the example in Figure 5B is supposed and the terminal 2c is selected from the portable terminals 2a to 2c and switched to the Miracast connection will be described here.

In step S201, the plurality of portable terminals 2a to 2c are sequentially connected to the projector 1 by the Wi-Fi Direct. In step S202, the projector 1 serves as a group owner of the Wi-Fi Direct. More specifically, the projector 1 serves as a device which performs the function of an access point among the devices connected to the projector 1 by the Wi-Fi Direct. In step S203, the PC 3 and the projector 1 are connected to each other through the access point 4.

In step S204, the PC 3 designates the projector 1 to be Miracast-connected to a desired portable terminal, for example, the portable terminal 2c. In response to this, the radio signal input unit 20 (AP chip 23) of the projector 1 selects the portable terminal 2c to make a Miracast connection. In step S205, the designated portable terminal 2c outputs a video signal to the projector 1 by the Miracast scheme. The projector 1 displays the video image received from the portable terminal 2c.

In step S206, after a desired video image is displayed by the projector 1, the PC 3 designates the projector 1 to cut the Miracast connection. In step S207, the designated portable terminal 2c deactivates the Miracast connection to the projector 1 to stop the video output.

In step S208, it is determined whether a connection to the portable terminal is switched to a connection to another portable terminal. When the connection is switched, the operation returns to step S204 to perform a Miracast connection to the other portable terminal. When the connection is not switched, the operation shifts to step S209. In step S209, a Wi-Fi Direct connection between each of the portable terminals 2a to 2c and the projector 1 is canceled.

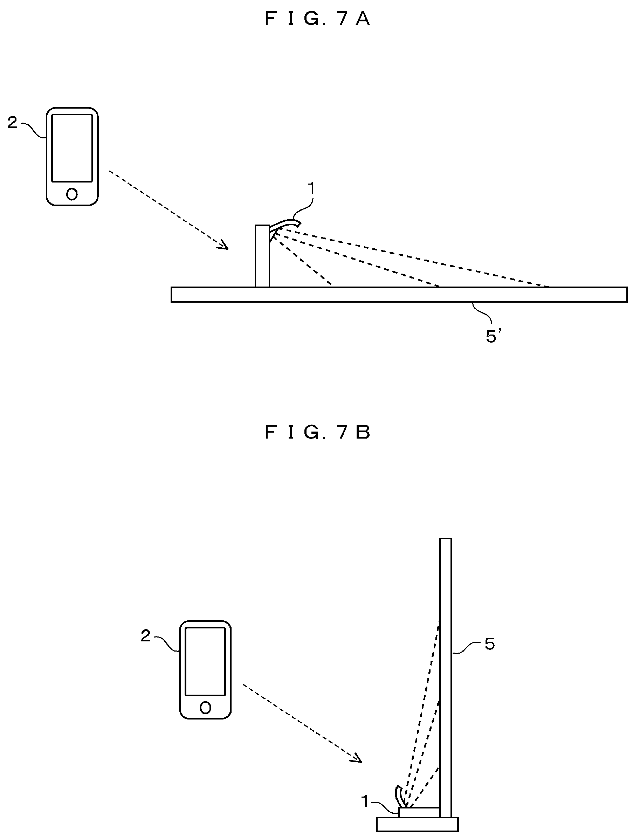

Figure 7A and Figure 7B are diagrams showing installations of projection-type video display devices. Both the installations are arrangements suitable for an ultra-short focus projection-type projector.

Figure 7A shows projection on a desk and a case in which the projector 1 is vertically installed on the desk to display a video image by considering a desktop surface 5' as a screen. For example, the arrangement is suitably used in a conference held while members of the conference are sitting around a table. The conference members operate their portable terminals 2 besides them to make it possible to display images.

Figure 7B shows screen projection and a case in which the projector 1 is stationarily installed to display a video image on the screen 5 installed in a standing manner. This arrangement is suitable for normal presentation. A presenter can make an explanation with the portable terminal 2 held in her/his hand while monitoring a video image (mirroring function). In the ultra-short focus projection-type projector, conference members and the presenter or the like are close to the projector, and the conference members and the presenter advantageously easily use the touch function of the NFC tag.

As described above, according to the embodiment, a portable terminal and the projection-type video display device can be easily radio-connected to each other, and video images sent from a plurality of portable terminals can be freely switchably displayed by the projection-type video display device advantageously. In this manner, the usability of the projection-type video display device is considerably improved. In the embodiment, the description is given on the basis of the wireless video transmission standard Miracast established by the Wi-Fi Alliance. However, even in another wireless video transmission scheme using the Wi-Fi Direct connection, the same advantage as described above can be obtained.

### Reference Signs List

1...projection-type video display device (liquid crystal projector),
2...portable terminal (smart phone, tablet),
3...personal computer (PC),
4...access point,
5...projection surface (screen),
6...Internet,
7...maintenance service company,
8...remote controller,
9...reflecting mirror,
10...proximity communication unit,
11...antenna,
12...NFC tag,
13...RF circuit,
14...changeover switch,
15...first memory,
16...second memory,
17...CPU,
20...radio signal input unit,
21...antenna,
22...RF chip,
23...AP chip,
24...third memory,
25...image processing circuit,
26...control signal input terminal pad.

## Claims

1. A projection-type video display device which is connected to an external device to display a video image input from the external device, the external device including a portable terminal, comprising
a proximity communication unit which can be directly connected to the portable terminal by a radio transmission scheme without a relay station and
transmits/receives device information of the projection-type video display device to/from the external device, wherein
the external device is put over or touched on the proximity communication unit to transmit/receive the device information.

2. The projection-type video display device according to claim 1, wherein
the device information includes setting information for radio connection to the projection-type video display device.

3. The projection-type video display device according to claim 1, wherein
the device information includes operation setting information of the projection-type video display device.

4. The projection-type video display device according to claim 1, wherein
the device information includes operating information of the projection-type video display device.

5. A projection-type video display device which is connected to a plurality of external devices to display video images input from the external devices, the external devices including portable terminals, comprising:
a radio signal input unit which can be directly connected to the portable terminals by a radio transmission scheme without a relay station,
selects an external device for displaying a video image from the plurality of external devices, and connects the selected external device.

6. The projection-type video display device according to claim 5, wherein
the radio signal input unit sequentially connects the external devices and displays images sent from the external devices as a multi-screen on the same screen.

## Amended claims

### Amended claims under Art. 19.1 PCT

1. A projection-type video display device which is connected to an external device to display a video image input from the external device, the external device including a portable terminal, comprising
a proximity communication unit which can be directly connected to the portable terminal by a radio transmission scheme without a relay station and
transmits/receives device information of the projection-type video display device to/from the external device, wherein
the device information includes operating information of the projection-type video display device, and
the external device is put over or touched on the proximity communication unit to transmit/receive the device information.

2. The projection-type video display device according to claim 1, wherein
the device information includes setting information for radio connection to the projection-type video display device.

3. The projection-type video display device according to claim 1, wherein
the device information includes operation setting information of the projection-type video display device.

4. The projection-type video display device according to claim 1, wherein
the operating information further includes information of a filter of the projection-type video display device.

5. The projection-type video display device according to claim 1, wherein
the operating information further includes information of a lamp of the projection-type video display device.

6. The projection-type video display device according to claim 1, wherein
the operating information further includes failure information of the projection-type video display device.

Statement under Art. 19.1 PCT
1. Claim 1: The description "the device information includes operating information of the projection-type video display device" is based on the item described in claim 4 on filing.

2. Claim 7: The description "the operating information further includes information of a filter of the projection-type display device" is based on the item described in Paragraph 0017 of the Description on filing.

3. Claim 8: The description "the operating information further includes information of a lamp of the projection-type display device" is based on the item described in Paragraph 0017 of the Description on filing.

4. Claim 9: The description "the operating information further includes failure information of the projection-type display device" is based on the item described in Paragraph 0017 of the Description on filing.
